# DEMANDE DE BREVET EUROPEEN

(11) **EP 3 175 932 A1**
(43) Date de publication de la demande: **07.06.2017**
(21) Numéro de dépôt: 15197486.2
(22) Date de dépôt: 02.12.2015
(51) Int. Cl.: B09B 3/00, C04B 18/04, C04B 18/16

(54) **PROCÉDÉ DE TRAITEMENT ET DE VALORISATION DES MATÉRIAUX CONTENANT DE L'AMIANTE**

(71) Demandeur: Pardefi SA, 7011 Ghlin (BE)
(72) Inventeur: Goudaillez, François, 7050 Erbisoeul (BE); Descamps, Philippe, 6533 Biercée (BE); Gosselin, Gérald, 7500 Tournai (BE); Lombart, Fabien, 7070 Thieu (BE); Donfut, Didier, 7080 Sars-la-Buissière (BE)
(74) Mandataire: Pronovem

(57) **Abrégé**

La présente invention concerne un procédé de traitement de déchets contenant des fibres minérales cristallisées faiblement biosolubles, comprenant les étapes suivantes:
(1) introduire lesdits déchets dans une cisaille rotative dans laquelle les déchets sont cisaillés en continu jusqu'à obtention de particules ayant une taille caractéristique de moins de 50 mm et préférentiellement de moins de 20 mm;
(2) transférer les particules dans un broyeur dans lequel elles sont micronisées pendant un temps inférieur à 10 min, de préférence inférieur à 1 min, de préférence encore inférieur à 5 s, jusqu'à obtention de particules ayant une taille caractéristique de moins de 1 mm et de préférence de moins de 100 µm;
(3) transférer les particules dans un broyeur utilisant des corps broyants et opérant en voie sèche, les particules étant micronisées pendant un temps inférieur à 3 heures, de préférence inférieur à 30 min jusqu'à obtention de particules ayant une taille caractéristique de moins de 5 µm ou non détectables.

## Description

### Objet de l'invention

La présente invention se rapporte à un procédé de traitement des déchets provenant de chantiers de désamiantage dans le but d'éradiquer le caractère cancérigène (ou cancérogène) induit par les fibres d'amiante, pour ensuite les destiner à une filière de valorisation en four de cimenterie comme matières secondaires ou à toute autre filière donnant des garanties au point de vue sanitaire et/ou environnemental.

Les déchets ciblés sont les fibres minérales naturelles cristallisées, faiblement biosolubles. Ils comprennent les matériaux contenant de l'amiante (libre) ou MCA ainsi que les fibres céramiques telles que l'alumine.

### Arrière-plan technologique, état de la technique et problème technique à résoudre

Le terme « amiante » ou « asbeste » désigne une série de fibres minérales naturelles cristallisées et faiblement biosolubles utilisées dans l'industrie. Ce sont des silicates magnésiens ou calciques appartenant aux groupes minéralogiques des serpentines et des amphiboles. Les diverses catégories d'amiante correspondent à plusieurs espèces minérales. Le chrysotile ou amiante blanc est la variété la plus courante, la seule du groupe des serpentines. Le groupe des amphiboles comprend cinq variétés : la crocidolite (amiante bleu), l'amosite (amiante brun), la trémolite, l'actinolite et l'anthophyllite.

A la fin du XIX^{e} siècle, l'amiante a été largement utilisé dans l'industrie pour ses propriétés de résistance à la chaleur, au feu, à la tension, aux agressions électriques et chimiques, ainsi que pour son pouvoir absorbant. Sous sa forme friable, il a été utilisé dans de nombreux calorifugeages et flocages, ainsi qu'en feuilles, feutres, colles, mastics, plaques cartonnées, ou tressé ou tissé. On le trouve aussi sous une forme non friable, incorporé dans des produits en ciment (amiante-ciment) ou dans des liants divers (colles, peintures, joints, mortiers à base de plâtre, béton bitumineux, matériaux de friction et même asphaltes routiers ou d'étanchéité, etc.). Il a aussi été utilisé pour les patins de freins ou en garniture de chaudière ou fours électriques, ou encore dans diverses installations électriques (ex. : plaques chauffantes) pour ses capacités d'isolation électrique à forte température. Il a été massivement utilisé dans les bâtiments pour ses propriétés ignifuges, isolantes, sa flexibilité, sa résistance à la tension et parfois pour sa résistance aux produits chimiques.

Dès le début du XXème siècle, le caractère dangereux de l'amiante a clairement été identifié. Il faudra cependant attendre les années 1980 pour que son utilisation soit interdite dans de nombreux pays. L'inhalation de fibres d'amiante est à l'origine de la fibrose pulmonaire, de cancers broncho-pulmonaires, ainsi que de cancers de la plèvre et de cancers des voies digestives.

En raison du caractère cancérigène avéré des fibres d'amiante il est nécessaire de disposer de moyens efficaces pour rendre inoffensifs les déchets contenant de l'amiante ou MCA.

A cet égard, il existe plusieurs procédés visant à réduire ou éliminer totalement le caractère nocif des MCA.

On distingue les procédés permettant de conditionner les MCA dans des matrices de différentes natures comme, par exemple, le béton ou les résines et les procédés visant à modifier la structure des fibres minérales de l'amiante. Dans les deux cas, le produit obtenu par ces procédés est caractérisé par une faible granulométrie.

L'art antérieur s'est intéressé à des techniques de broyage diverses afin d'obtenir une granulométrie fine des fibres minérales. On distingue principalement les broyeurs rotatifs utilisant des couteaux et les broyeurs vibrants, par attrition, planétaires ou à anneaux utilisant des corps broyeurs comme les boulets ou les cylpebs.

En Belgique, deux types de traitements sont pratiqués qui dépendent du type d'amiante à traiter. Les MCA peuvent être traités via Rematt (en Flandre) qui réalise une encapsulation dans une phase cimentaire. Le problème de ce procédé est que l'amiante est mis en décharge après traitement. Or, le client reste propriétaire de l'amiante fourni tant que la dangerosité du produit subsiste. L'autre solution est mise en oeuvre par Inertam (à Bordeaux), qui utilise une torche à plasma qui déstructure l'amiante à 1800°C. Ce procédé s'avère présenter un coût élevé et une grande consommation d'énergie.

Le document WO 02/38296 A1 divulgue un procédé d'inertage des déchets de MCA dans lequel les déchets sont broyés dans un broyeur à boulets en présence d'un fluide inerte (eau) de manière à obtenir une boue de particules d'amiante ayant des tailles s'étalant de 5 à 500 µm et présentant une distribution granulométrique, par exemple, telle que seulement 5% des particules ont une taille inférieur à 38 µm, convenant pour des étapes ultérieures de transformation et d'agrégation visant l'élimination des déchets.

Dans les déchets MCA, on rencontre principalement trois types de fibres : les fibres de chrysotile, de crocidolite et d'amosite. Si l'on se réfère à la plupart des brevets, ceux-ci font état de la déstructuration des fibres de chrysotile (qui est le cas le plus facile à traiter suite à sa structure cristalline en feuilles superposées) et se basent généralement pour vérifier l'absence d'amiante sur des analyses indirectes comme l'IR (infrarouge) ou la DRX (diffraction des rayons x). En outre, dans certains brevets, on ne parle pas d'éradication totale du chrysotile mais bien de la réduction de sa concentration sous une valeur seuil définie par la législation du pays concerné. En revanche, peu de documents se réfèrent au traitement des fibres de crocidolite et d'amosite, notamment en raison de la plus grande rigidité de ces fibres et de leur plus grande inertie chimique.

Il existe donc une demande pour disposer d'un procédé de réduction granulométrique de manière à atteindre un seuil de non-toxicité.

Le procédé décrit dans le document WO 02/38296 A1 ne permet pas de déstructurer les fibres d'amosite car la granulométrie obtenue n'est pas suffisamment fine.

Le caractère dangereux de l'amiante étant lié à la taille et à la morphologie des fibres, le problème technique à résoudre consiste à fournir un procédé de traitement des MCA permettant d'obtenir une matière au sein de laquelle les fibres ne sont plus identifiables conformément aux critères réglementaires.

### Buts de l'invention

Le procédé de l'invention a pour but d'éradiquer le caractère cancérigène induit par les fibres d'amiante en déstructurant complètement les fibres par comminution accompagnée d'une modification de leur structure cristalline et/ou en obtenant des particules allongées résiduelles non identifiables en tant que fibre cancérigène, ayant une granulométrie inférieure à 5 µm et un rapport d'aspect (ou facteur de forme) suffisamment bas pour que les particules résiduelles d'amiante, même si elles n'ont pas été complètement amorphisées, ne puissent plus être qualifiées de fibres.

L'invention a aussi pour but de valoriser le produit traité dans un four de cimenterie ou dans toute autre filière.

### Principaux éléments caractéristiques de l'invention

Un premier aspect de la présente invention se rapporte à un procédé de traitement de déchets contenant des fibres minérales cristallisées faiblement biosolubles, comprenant les étapes suivantes:
(1) introduire lesdits déchets dans une cisaille rotative dans laquelle les déchets sont cisaillés en continu jusqu'à obtention de particules ayant une taille caractéristique de moins de 50 mm et préférentiellement de moins de 20 mm;
(2) transférer les particules dans un broyeur dans lequel elles sont micronisées pendant un temps inférieur à 10 min, de préférence inférieur à 1 min, de préférence encore inférieur à 5 s, jusqu'à obtention de particules ayant une taille caractéristique de moins de 1 mm et de préférence de moins de 100 µm;
(3) transférer les particules dans un broyeur utilisant des corps broyants et opérant en voie sèche, les particules étant micronisées pendant un temps inférieur à 3 heures, de préférence inférieur à 30 min jusqu'à obtention de particules ayant une taille caractéristique de moins de 5 µm ou non détectables.

Des modes d'exécution préférés de l'invention comprennent en outre en combinaison une ou plusieurs des caractéristiques suivantes:
- les déchets sont des matériaux contenant de l'amiante (MCA) ;
- les fibres sont sélectionnées parmi le groupe constitué de fibres de chrysotile, de crocidolite, d'amosite et d'un mélange de ces fibres ;
- l'étape (1) est réalisée dans une cisaille rotative étanche ;
- l'étape (2) est réalisée dans un microniseur fonctionnant par impact et/ou par cisaillement ;
- l'étape (3) est réalisée dans un broyeur équipé d'un système de refroidissement ;
- l'étape (3) est réalisée dans un broyeur qui génère majoritairement des (ou favorise les) forces de friction et de cisaillement (même s'il peut y avoir une composante de choc) telles que celles typiquement rencontrées dans les broyeurs vibrants ;
- dans l'étape (3), les corps broyants sont sélectionnés parmi le groupe constitué des boulets, des cylpebs cylindriques et des cylpebs tronconiques. Les corps broyants préférés sont des cylpebs ;
- dans l'étape (3) les corps broyants se caractérisent par une surface régulière, c'est-à-dire avec peu ou pas d'aspérités ou d'évidements, et qui soit

suffisamment rugueuse pour éviter que ceux-ci ne roulent trop aisément les uns sur les autres, ce qui réduirait les forces de cisaillement ;
- à l'issue de l'étape (1), les particules sont accumulées dans une trémie-tampon avant d'être transférées dans le broyeur opérant à la fois par impact et par cisaillement de l'étape (2) ;
- à l'issue de l'étape (2), les particules sont transférées dans un séparateur équipé d'un filtre à manches de manière à récupérer une fraction de particules inférieure à 100 µm avant leur transfert vers le broyeur de l'étape (3) ;
- à l'issue de l'étape (3), les particules sont conditionnées en contenant étanche ;
- l'étape (1) est précédée d'une étape de séparation des pièces métalliques au moyen d'un séparateur magnétique.

Un second aspect de la présente invention se rapporte à l'utilisation du produit obtenu par le procédé susmentionné comme matière secondaire dans un procédé de fabrication du ciment dans un four rotatif.

### Brève description des figures

La figure 1 est une représentation schématique des étapes du procédé de traitement et de valorisation des MCA selon l'invention
La figure 2 représente un exemple de courbe de distribution granulométrique cumulée pour des déchets MCA micronisés au cours de la deuxième étape du procédé de l'invention.
La figure 3 représente la courbe de distribution granulométrique non cumulée correspondante pour des déchets MCA micronisés au cours de la deuxième étape du procédé selon l'invention.
La figure 4 est une photographie de cylpebs cylindriques utilisés comme corps broyants au cours de la troisième étape du procédé de l'invention.
La figure 5 est une photographie de cylpebs tronconiques utilisés comme corps broyants au cours de la troisième étape du procédé de l'invention.
La figure 6 est une représentation graphique montrant l'efficacité théorique des corps broyants de type boulets et cylpebs.

### Description détaillée de l'invention

### Définitions

Dans le cadre de l'invention, les déchets traités comprennent des fibres minérales naturelles cristallisées non biosolubles ou faiblement biosolubles. Le caractère biosoluble signifie que les fibres se dissolvent dans les liquides physiologiques comme ceux se trouvant dans les alvéoles pulmonaires. Cette définition inclut les fibres d'amiante telles que les fibres de chrysotile, de crocidolite et d'amosite mais également les fibres céramiques telles que l'alumine.

Les « broyeurs » sont des appareils de fragmentation adaptés à des besoins industriels spécifiques, leurs technologies diffèrent selon le domaine d'utilisation. Pour la fragmentation grossière, des déchiqueteurs peuvent être utilisés. Ce sont, par exemple, des broyeurs rotatifs à couteaux qui travaillent par cisaillement ou arrachement. Leur vitesse de rotation est lente et leur consommation en énergie est faible. La fragmentation fine fait appel à des broyeurs utilisant des corps broyants libres. Ce sont généralement des appareils cylindriques ou cylindro-coniques tournant autour de leur axe horizontal et contenant des corps broyants.

La « micronisation » d'un solide est l'opération consistant à moudre des granulés jusqu'à obtention d'une poudre très fine dont les grains ont un diamètre de quelques µm à quelques centaines de µm.

Le terme « particules non détectables » signifie que les particules sont non détectables par microscopie optique en lumière polarisée qui est le mode d'analyse reconnu réglementairement.

Un « broyeur à attrition ou attriteur » est un broyeur dans lequel le broyage de la matière est réalisé par usure des particules entre des billes mises en mouvement, soit au moyen de pales rotatives dans un récipient fixe, soit au moyen de la rotation du récipient.

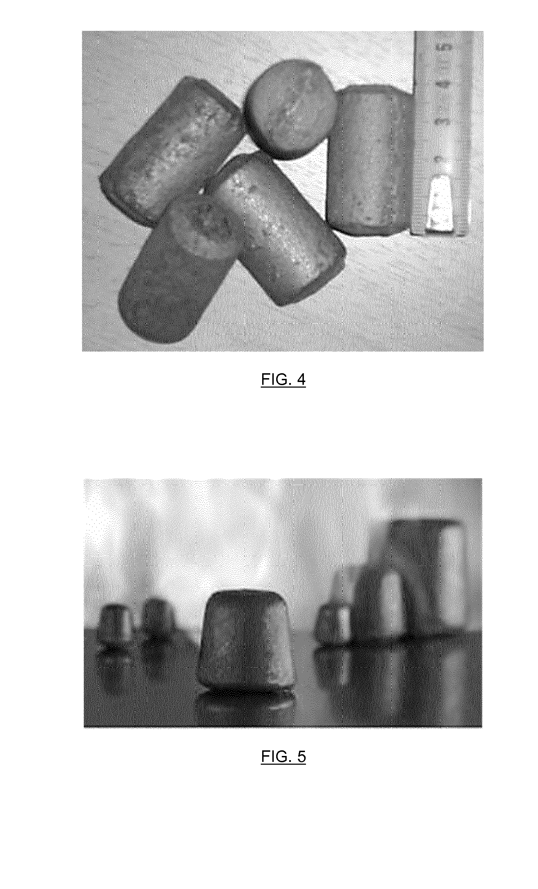

Les « corps broyants » sont des éléments importants des équipements internes des broyeurs. On distingue principalement les billes, boulets, les barres, les cylpebs (cylindriques, tronconiques montrés aux figures 4 et 5) et les boulpebs qui sont des cylpebs dont les bases des cylindres sont arrondies. Les corps broyants sont le plus souvent en fonte, en acier, en silex ou en céramique et sont fabriqués par forgeage ou coulée. Les « cylpebs » sont généralement cylindriques et ont un rapport longueur sur diamètre de 1.

Les corps broyants utilisés dans le cadre de l'invention se caractérisent par une surface plane avec peu de défauts de surface (aspérités ou évidements) sans être toutefois complètement lisses. Une certaine rugosité est aussi nécessaire pour éviter qu'ils ne roulent trop aisément les uns sur les autres, ce qui réduirait les forces de cisaillement.

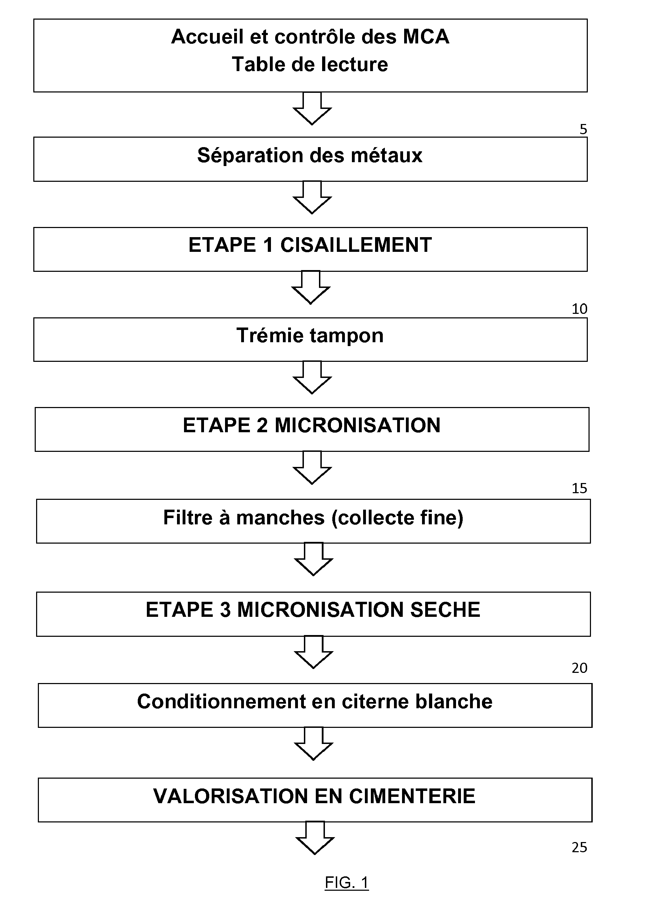

Sur un plan technique, le procédé comprend plusieurs étapes successives reprises à la figure 1 et correspondant chacune à une optimalisation de traitement. Celles-ci sont décrites dans les exemples suivants.

### Exemple 1 : procédé de traitement des MCA

Toutes les activités de traitement des déchets MCA ont lieu en zone confinée qui, elle-même est connectée à un ou plusieurs sas, dédiés notamment à la décontamination du personnel et à celle du matériel. La zone confinée est mise en dépression et les flux d'air sont filtrés au moyen de filtres absolus.

Les déchets de MCA conditionnés en sacs de différentes dimensions sont réceptionnés dans un hall.

Les sacs sont ouverts par un opérateur équipé d'un système de protection respiratoire. Ils sont contrôlés sur une « table de lecture », permettant d'extraire les déchets incongrus ou non broyables.

Un tapis de transport emporte les déchets étalés vers un séparateur magnétique de type Overband ou poulie magnétique, de manière à en extraire les pièces métalliques comme les métaux ferreux. Les métaux récupérés feront ensuite l'objet d'un nettoyage-désamiantage pour leur permette d'être recyclés via les filières habituelles.

Les déchets MCA sont ensuite introduits dans une cisaille rotative étanche, c'est-à-dire dont le mode d'alimentation est conçu pour limiter l'émission de poussières, de sorte qu'ils sont réduits sous forme de « chips » d'une dimension inférieure à environ 50 mm et préférentiellement d'une dimension inférieure à 20 mm.

Préférentiellement, la cisaille ne sera pas pourvue d'une grille de décharge. Cela permet d'éviter que certains éléments exogènes, tels que typiquement les plastiques, ne viennent la colmater et n'induisent, de ce fait, un phénomène de bourrage. De plus, l'absence de grille de décharge pourrait dans certains cas conduire à une recirculation de la matière pour atteindre la granulométrie voulue.

Les « chips» obtenus sont ensuite accumulées dans une trémie-tampon en vue d'alimenter une seconde étape de comminution (fragmentation) de manière régulée.

Cette seconde étape consiste en une micronisation dans un broyeur à grande vitesse, supérieure à 10 m/s (par exemple environ 100 m/s), fonctionnant par impact/cisaillement, ce qui va permettre d'obtenir une matière réduite sous la dimension de quelques centaines de microns. Le temps de traitement est de moins d'une minute, de préférence de moins de 5 s.

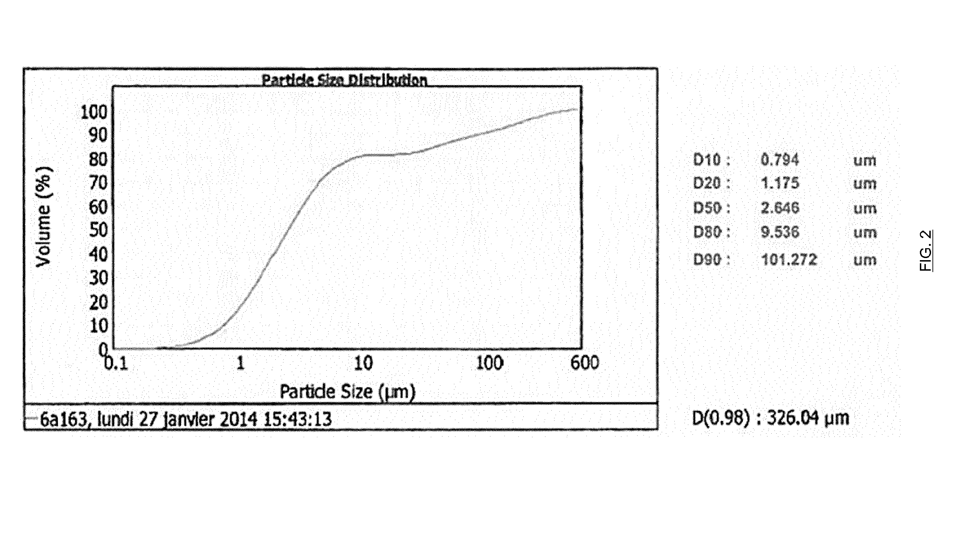

Ce type de broyeur permet de microniser des produits très hétérogènes tels que précisément les MCA qui sont majoritairement composés de matières minérales à caractère fragile mais contiennent également des éléments légers à caractère ductile comme les morceaux de sacs plastiques, de gants en plastique ou en croûte de cuir, de tissu, de carton, etc. Une courbe de distribution granulométrique cumulée des déchets MCA micronisés à la seconde étape est illustrée à la figure 2.

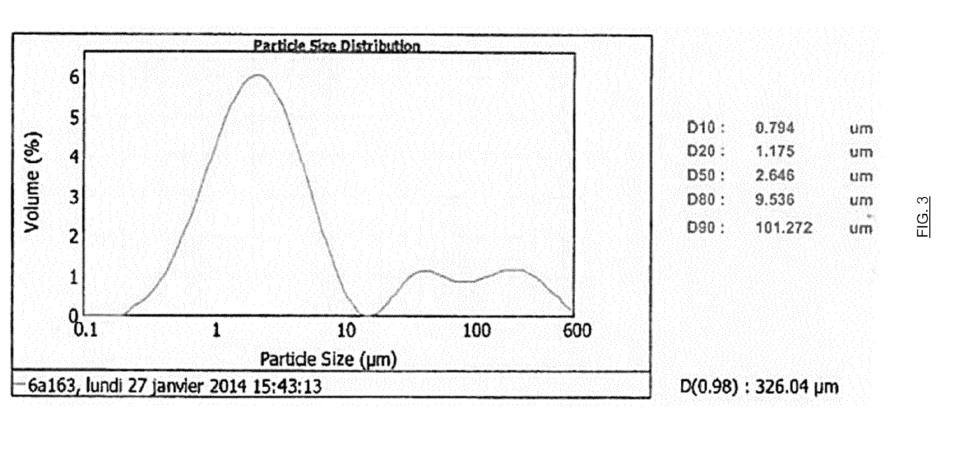

La figure 2 indique que 50% des particules ont une taille inférieure à 3 µm et que 90% d'entre-elles présentent une taille inférieure à 102 µm et ce, malgré la présence effective de plusieurs familles de matériaux composant les MCA, comme l'illustre la figure 3 correspondant à la distribution granulométrique non cumulée correspondante aux déchets MCA broyés, cette distribution étant dans ce cas tri-modale.

La deuxième étape est une étape intermédiaire du procédé. Si cette étape était omise, cela engendrerait un certain nombre de problèmes techniques liés à l'extrême hétérogénéité de composition des MCA qui, comme mentionné plus haut, outre des phases minérales à caractère fragile, comprend des matériaux ductiles comme les plastiques, le caoutchouc, le cuir, etc. Ces matériaux ductiles sont susceptibles d'engendrer les problèmes suivants lors de l'étape ultime de traitement si leur taille n'a pas été suffisamment réduite:
- la présence de résidus imbroyés qui aurait pour effet de boucher la grille de décharge du broyeur et, de ce fait, de pouvoir sortir difficilement la matière minérale de ce dernier ;
- l'accumulation de ces imbroyés dans le broyeur nécessitant des arrêts de production pour effectuer la vidange de celui-ci ;
- une diminution drastique de l'efficacité de broyage, suite à cette accumulation d'imbroyés, car, les plastiques, les caoutchoucs et autres matières exogènes induisent une réponse élastique qui réduit les forces de friction et de cisaillement de même que les chocs au sein du broyeur vibrant ;
- un risque d'agglomération et de bouletage de certains plastiques, qui résulterait de l'élévation de température dans le broyeur. Le bouletage des plastiques est susceptible de conduire à une encapsulation d'un certain nombre de fibres qui, de ce fait, ne seraient pas altérées et maintiendraient donc leurs caractéristiques morphologiques et leur caractère cancérigène.

Au niveau de cette seconde étape de broyage, un séparateur aéraulique est placé à la sortie du broyeur microniseur et permet de fixer la granulométrie à la sortie, c'est-à-dire qu'il permet de régler le système de broyage en choisissant la finesse.

La fraction broyée est récupérée dans un « filtre à manches » ou un équipement de séparation équivalent d'où elle est extraite pour être envoyée vers la troisième et dernière étape de comminution. Celle-ci consiste à affiner la micronisation de la matière obtenue suite à l'étape intermédiaire de broyage, voire de la transformer, par exemple, par un processus d'amorphisation, pour ensuite l'extraire par un système pneumatique et la stocker dans des containers ou contenants étanches en attente de son envoi en valorisation.

Cette troisième étape de comminution implique de faire appel à des broyeurs spécifiques utilisés pour la mécano-chimie, conduisant à la transformation de la matière et, dans certains cas, à la création de nouvelles phases et opérant en voie sèche. Ces broyeurs font intervenir des forces de friction, de cisaillement et d'impact dont l'intensité est en fait fonction de leur mode de conception tel qu'illustré par le Tableau 1 suivant.

**Tableau 1 Comparaison de différents broyeurs utilisés en mécano-chimie**

| **Dispositif** | **Broyeur vibrant** | **Simoloyer®** | **Broyeur planétaire** | **Broyeur attriteur** | **Broyeur à boulets** |
|---|---|---|---|---|---|
| **Relation énergie/ impact** | 10 | 08 | 05 | 04 | 01 |
| **Relation friction/ cisaillement** | faible | faible | moyenne | moyenn e-élevée | élevée |
| **Relation de Collision** | élevée | élevée | moyenne | faible-moyenn e | faible |
| **Cinétique** | Très rapide | rapide | moyenne | moyenn e | lente |
| **Influence de la gravité** | faible | très faible | faible | difficile | requise |
| **Diamètre max. (m)** | 0,08 | 0,9 | 0,2 | 1 | 3 |
| **Volume total max. (I)** | 0,2 | 400 | 8 | 1000 | 20000 |
| **Vitesse max. relative (m/s)** | 12 | 14 | 5 | 4,5-5,1 | 5 |
| **Energie spécifique (KW/I)** | -- | 0,55-3 | -- | 0,1-0,75 | 0,01-0,03 |
| **Procédé en continu (à sec)** | pas possible | semi- continu | pas possible | difficile | pas possible excepté broyeur tubulaire |
| **Fermeture hermétique** | non | oui | non | oui | non |
| **Lot max. (kg)** | 0,2 | 250 | 2 | 250 | 12000 |
| **Contamination** | faible | faible-élevée | faible | faible-élevée | faible |
| **Sous vide** | possible | -10-⁴ hPa | possible | faible | faible |
| **Evacuation** | très difficile | facile | très difficile | moyenn e | facile |
| **Sas** | pas possible | oui | pas possible | difficile (gravité) | pas possible sauf BMxx-zoz |
| **Contrôle de T°** | très difficile | possible | difficile | possible | possible |

Parmi, ces broyeurs, on recense notamment ceux commercialisés par les firmes Spex, Siebtechnik, Palla, ZOZ ainsi qu'Union Process. Signalons que le broyeur à sec d'Union Process se base sur le principe de l'attrition. Dans ce cas, les forces d'impact sont fortement réduites. Par rapport aux équipements commercialisés par les autres firmes, celui-ci se distingue sur un plan technique par le fait que la virole qui constitue le corps du broyeur n'est pas mise en vibration et donc, que l'attrition se fait au moyen d'un bras agitateur qui a pour effet de brasser un lit de billes auquel la matière à microniser a été mélangée.

Lors de cette troisième étape du procédé, la matière est micronisée au moyen de l'un des broyeurs utilisés en mécano-chimie, une adaptation de la durée de traitement permet :
- d'assurer la réduction granulométrique de toutes les fibres d'amiante sous 5 µm (D₁₀₀< 5µm) et une modification drastique de leur morphologie ;
- de provoquer une amorphisation partielle ou totale de celles-ci.
Ces opérations combinées enlèvent toute trace de chrysotile et de crocidolite et même, si certaines particules présentent encore la structure cristalline de l'amosite (suite au fait que l'amorphisation n'est pas totale), ces particules satisfont aux critères de taille et de morphologie qui font qu'elles ne présentent plus de caractère cancérigène.

Une fois les MCA traités et donc leur caractère toxicologique réduit, ceux-ci sont conditionnés dans des citernes ou contenants étanches.

Plusieurs pistes ont été investiguées pour améliorer le processus de réduction granulométrique et favoriser l'amorphisation au cours de la troisième et dernière étape du procédé de traitement des MCA.

### Exemple 2 : optimisation de la troisième étape du procédé - effet d'une élévation de température

Les inventeurs ont évalué si le fait d'augmenter la température du broyeur avait une influence positive sur le processus de réduction granulométrique. Le moyen de parvenir à une élévation de température a été de ne pas refroidir le broyeur.

Le traitement des MCA a été réalisé selon l'exemple 1. Seule la troisième étape du procédé a été modifiée. Le broyeur utilisé est un broyeur vibrant pourvu de corps broyants (boulets, cylpebs cylindriques ou tronconiques) remplissant un volume correspondant à +/-75% du volume total. Le système de refroidissement a été coupé pendant l'opération de broyage. Cette piste n'a cependant pas conduit à des améliorations en matière de performance de broyage et ce, quel que soit le type de milieu de broyage utilisé (boulets, cylpebs cylindriques ou tronconiques).

Lors des essais, la température a augmenté de façon continue pour ensuite se stabiliser aux alentours de 60 °C (température mesurée au niveau de la surface externe de la virole). Même si à l'échelle industrielle, la température peut atteindre 100°C, ce que tolère l'équipement, cela ne va pas sans doute permettre de changer drastiquement la performance en matière de broyage.

En revanche, même si l'humidité des MCA n'est que de quelques pour cent, l'élévation de température dans le broyeur conduit à des effets de condensation, en particulier, sur la partie haute du broyeur, c'est-à-dire, au niveau du tube d'alimentation. L'eau condensée se mélange aux poussières de MCA et forme une croûte qui a tendance à s'indurer et ne peut s'enlever qu'au moyen d'un grattoir. Il est clair que sur un plan industriel, l'accumulation de la matière à l'alimentation peut poser des problèmes de maintenance, de sorte que l'option qui a été prise de couper le refroidissement du broyeur n'apparaît pas pertinente.

A ce niveau, il importe également de souligner que, grâce à l'introduction d'une matière micronisée (provenant de la deuxième étape) à l'alimentation du broyeur vibrant, d'une part, il n'y a eu aucun problème pour sortir la matière au niveau de la grille de décharge et, d'autre part, le problème de bouletage des plastiques n'a pas eu lieu. Cette observation s'est généralisée lors de tous les essais réalisés au moyen du broyeur vibrant.

### Exemple 3 : optimisation de la troisième étape du procédé - influence de la géométrie des corps broyants

L'utilisation de corps broyants de différentes formes et avec différents états de surface a été comparée. En effet, la surface des boulets devrait en principe, être suffisamment plane et exempte d'aspérités ou d'évidements pour permettre d'avoir un lit fin de matière entre les corps broyants (boulets, cylpebs cylindriques, cylpebs tronconiques) et suffisamment rugueuse pour éviter que ceux-ci ne roulent trop aisément les uns sur les autres, ce qui aurait pour effet de réduire l'intensité des forces de friction et de cisaillement.

Le traitement des MCA a été réalisé selon l'exemple 1. Seule la troisième étape du procédé a été modifiée. Le broyeur utilisé est un broyeur vibrant pourvu de corps broyants.

Au cours de cette optimisation, trois géométries de corps broyants ont été testées: des boulets de 30 mm de diamètre, des cylpebs cylindriques de 40 mm par 20 mm et des cylpebs tronconiques de 24 mm par 24 mm. Les cylpebs employés sont illustrés aux figures 4 et 5.

Ces corps broyants se distinguent par des états de surface différents. Les boulets présentaient une surface relativement lisse et régulière alors que les cylpebs et surtout les cylpebs tronconiques étaient beaucoup plus rugueux et certains d'entre eux présentaient en plus des évidements dans laquelle les MCA à broyer pouvaient s'accumuler et de ce fait, être soumis à des contraintes mécaniques moins importantes.

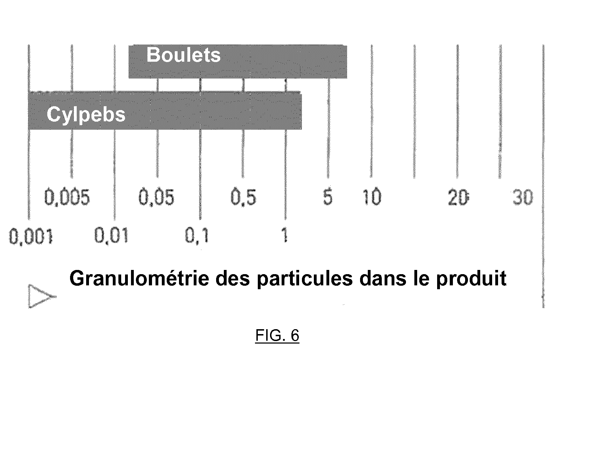

Ces essais ont conduit au constat que, même si, comme l'indique la figure 6, les cylpebs sont les corps broyants qui devaient théoriquement conduire au broyage le plus performant, les meilleurs résultats ont été obtenus avec les boulets qui se caractérisent par l'état de surface le plus régulier. En outre, seul l'usage des boulets a permis dans certains cas d'obtenir une amorphisation totale de toutes les variétés d'amiante contenues dans les MCA et ce, pour une durée de broyage de 3 h.

Un autre constat qui a pu être tiré de ces expériences est que le broyage est déjà efficace pour des temps réduits. Ainsi, dans le cas d'essais avec les boulets, après 30 min, les fibres de chrysotile et crocidolite ont été déstructurées et ne peuvent plus être détectées et la longueur des fibres d'amosite a été réduite à 5-7 µm. Pour un temps de broyage plus long fixé à 2 h, il s'est avéré que la longueur des fibres était toujours de l'ordre de 5 µm, ce qui signifie qu'au-delà de 30 min, le broyage n'était quasiment plus opérant, du moins en terme de réduction granulométrique des fibres d'amosite.

Le constat qu'un temps de 2h ne permet pas de réduire significativement la granulométrie des fibres d'amosite est probablement lié à l'utilisation de boulets de trop grand diamètre. Or, comme la matière introduite à déjà été micronisée et que la majorité des particules présentent une taille inférieure à 100 µm, des boulets, ou des corps broyants ayant d'autres géométries, de plus petite taille pourraient être utilisés. Cette taille mériterait cependant d'être optimalisée et un compromis devrait être trouvé de sorte que l'énergie cinétique reste suffisante pour provoquer une amorphisation des fibres d'amosite, principalement par déformation du réseau cristallin, suite aux contraintes de friction et de cisaillement importantes auxquelles ces fibres doivent être soumises.

Dans le cas des cylpebs, le contact entre les corps broyants est non plus de type ponctuel, comme c'est le cas pour les boulets, mais linéaire et, dans ce cas, l'effet de taille devrait s'avérer moins important. Sur base de cette analyse, la meilleure option pour obtenir un broyage et une amorphisation optimale consisterait donc à utiliser des cylpebs présentant un état de surface adéquat.

Le choix des cylpebs se justifie donc compte tenu du fait que, suite au contact linéaire entre eux, la limite de réduction granulométrique est moins tributaire de leur taille. Il en résulte la possibilité d'utiliser des corps broyants, en l'occurrence des cylpebs, de plus grande dimension et, de ce fait, de générer des contraintes plus importantes qui soient favorables au phénomène d'amorphisation.

### Exemple 4 : optimisation de la troisième étape du procédé - influence du type de broyeur

Le type de broyeur définit l'intensité des forces (chocs, friction/cisaillement) mises en jeu. Des essais ont été réalisés au moyen d'un broyeur vibrant d'un broyeur attriteur à sec ou encore d'un broyeur à anneaux de laboratoire.

Des essais de broyage ont été réalisés au moyen d'un broyeur attriteur qui, comme déjà mentionné dans l'exemple 1, met essentiellement en jeu des forces de friction et de cisaillement et, pour lequel, par rapport au broyeur vibrant les effets de chocs liés à la collision des boulets sont faibles. Le broyeur- attriteur testé est de petite capacité (volume < 1 litre) et les billes utilisées comme milieu de broyage présentent un diamètre de 5 mm.

Il s'est avéré que l'utilisation de l'attriteur permettait également d'amorphiser les fibres de chrysotile et de crocidolite mais pas les fibres d'amosite qui persistent même pour des temps de traitement de plusieurs heures.

Dans le cas de l'utilisation d'un attriteur à sec, la taille des fibres résiduelle d'amosite semble plus importante (5 à 8 µm avec certaines dont la longueur dépasse les 10 µm), ce qui est paradoxal dans la mesure où une taille de boulets plus petite (5 mm au lieu de 30 mm dans le cas du broyeur vibrant) est a priori considérée comme souhaitable. Cela laisse donc à penser que l'attriteur est moins efficace pour le traitement des MCA. De plus, l'attriteur ne permet pas d'utiliser des cylpebs dont le contact linéaire permet de descendre plus bas dans la granulométrie comme l'illustre d'ailleurs la figure 6.

Enfin, notons que l'attriteur permet difficilement de travailler en continu et semble peu compatible avec les tonnages de MCA à traiter à l'échelle industrielle de sorte que l'utilisation de broyeur vibrant apparaît comme la meilleure option technique dans la perspective d'un transfert industriel.

Le broyeur à anneaux de laboratoire, même s'il permet des optimisations utiles à l'échelle du laboratoire telles que celles réalisées en présence d'additifs (non décrites ici), ce type de broyeur n'est pas compatible avec les quantités de MCA à traiter à l'échelle industrielle.

Quelles que soient les conditions de broyage testées au cours des essais montrés ci-dessus et pour une durée de traitement qui varie entre 30 min et 1 h, les fibres et les particules d'amosite résiduelles n'ont pu être détectés en microscopie optique à lumière polarisée, qui est le mode d'analyse reconnu réglementairement, et que, seule une analyse approfondie par microscopie électronique à transmission équipé d'un système de micro-analyse EDX, a permis d'identifier.

### Valorisation

Les matières poudreuses, issues du traitement des déchets MCA en trois étapes décrit ci-dessus, sont conditionnées en citerne ou contenant étanche de manière à pouvoir être valorisées comme matières secondaires en cimenterie ou dans toute autre filière adéquate.

Après leur transport à la cimenterie, les poudres sont injectées en tuyère, soit directement, soit en dilution dans l'air primaire de sorte que les matières sont directement injectées au sein de la flamme du four rotatif dont le coeur atteint une température de l'ordre de 2.000 °C.

L'injection en tuyère peut être réalisée par un système pneumatique ou par un autre mode d'alimentation.

Cette filière de valorisation garantit ainsi la destruction totale des fibres d'amosite, couplée à une valorisation de matière au sein d'un four de clinkerisation. En effet, le procédé de traitement de broyage séquentiel permet déjà d'amorphiser totalement les variétés chrysotile et crocidolite et partiellement les fibres d'amosite en lecture électronique. En lecture optique, aucune fibre n'est plus détectée. Dans les pays où le contrôle est basé sur une législation préconisant une lecture à la microscopie électronique, il sera donc nécessaire d'obtenir une dérogation pour la faible quantité éventuelle de fibres d'amosite restante. L'intérêt de « santé publique » relatif à l'élimination de l'amiante devrait emporter la validation par les autorités publiques. Grâce à l'option de la valorisation en cimenterie, ces dernières, dont la toxicité aura déjà été fortement réduite suite à la diminution de leur taille et de leur rapport d'aspect (qui est fonction de la durée du traitement), subiront une fusion dans la flamme du four de cimenterie et devraient être complètement amorphisées de sorte que le couplage du traitement des MCA par broyage et de leur introduction dans un four de cimenterie constitue donc une filière sûre et pérenne qui garantit au propriétaire des MCA d'être déchargé de toute responsabilité, ce que permet également le procédé de traitement par torche plasma d'Inertam (dont le coût est cependant très élevé) mais pas le procédé d'encapsulation au ciment pratiqué en Belgique par Rematt.

### Avantages

L'invention apporte plusieurs avantages qui sont résumés ci-après :
- en fonction des conditions de traitement, les fibres de chrysotile et de crocidolite sont complètement déstructurées et le produit ainsi obtenu peut être valorisé en cimenterie ou placé en décharge pour déchets inertes/non dangereux ou encore orienté vers d'autres filières ;
- en fonction des conditions de traitement (conditions opératoires et durée), les fibres d'amosite sont amorphisées ou bien des particules allongées de faible rapport d'aspect persistent avec une longueur inférieure à 5 µm. La valorisation du produit en cimenterie permet d'amorphiser complètement les particules allongées résiduelles d'amosite ;
- le traitement en trois étapes et plus particulièrement la présence de la deuxième étape (étape intermédiaire) permet de microniser des produits très hétérogènes tels que précisément les MCA qui sont majoritairement composés de matières minérales à caractère fragile mais contiennent également des éléments légers à caractère ductile comme les morceaux de sacs plastiques, de gants en caoutchouc, du cuir, du tissu, du carton, etc. La présence de ces résidus ne perturbe pas le procédé ;
- le coût du traitement est compétitif par rapport aux techniques existantes.

## Revendications

1. Procédé de traitement de déchets contenant des fibres minérales cristallisées faiblement biosolubles, comprenant les étapes suivantes:
(1) introduire lesdits déchets dans une cisaille rotative dans laquelle les déchets sont cisaillés en continu jusqu'à obtention de particules ayant une taille caractéristique de moins de 50 mm et préférentiellement de moins de 20 mm;
(2) transférer les particules dans un broyeur dans lequel elles sont micronisées pendant un temps inférieur à 10 min, de préférence inférieur à 1 min, de préférence encore inférieur à 5 s, jusqu'à obtention de particules ayant une taille caractéristique de moins de 1 mm et de préférence de moins de 100 µm;
(3) transférer les particules dans un broyeur utilisant des corps broyants et opérant en voie sèche, les particules étant micronisées pendant un temps inférieur à 3 heures, de préférence inférieur à 30 min jusqu'à obtention de particules ayant une taille caractéristique de moins de 5 µm ou non détectables.

2. Procédé selon la revendication 1, **caractérisé en ce que** les déchets sont des matériaux contenant de l'amiante (MCA).

3. Procédé selon la revendication 1 ou 2, **caractérisé en ce que** les fibres sont sélectionnées parmi le groupe constitué de fibres de chrysotile, de crocidolite, d'amosite et d'un mélange de ces fibres.

4. Procédé selon l'une quelconque des revendications précédentes, **caractérisé en ce que** l'étape (1) est réalisée dans une cisaille rotative étanche.

5. Procédé selon l'une quelconque des revendications précédentes, **caractérisé en ce que** l'étape (2) est réalisée dans un microniseur fonctionnant par impact et/ou par cisaillement.

6. Procédé selon l'une quelconque des revendications précédentes, **caractérisé en ce que** l'étape (3) est réalisée dans un broyeur équipé d'un système de refroidissement.

7. Procédé selon l'une quelconque des revendications précédentes, **caractérisé en ce que** l'étape (3) est réalisée dans un broyeur qui génère majoritairement des forces de friction et de cisaillement tel que typiquement un broyeur vibrant.

8. Procédé selon l'une quelconque des revendications précédentes, **caractérisé en ce que**, dans l'étape (3), les corps broyants sont sélectionnés parmi le groupe constitué des boulets, des cylpebs cylindriques et des cylpebs tronconiques.

9. Procédé selon la revendication 8, dans lequel les corps broyants sont des cylpebs.

10. Procédé selon l'une quelconque des revendications précédentes, **caractérisé en ce que**, dans l'étape (3) les corps broyants se caractérisent par une surface régulière, c'est-à-dire avec peu ou pas d'aspérités ou d'évidements, et qui soit suffisamment rugueuse pour éviter que ceux-ci ne roulent trop aisément les uns sur les autres, ce qui réduirait les forces de cisaillement.

11. Procédé selon l'une quelconque des revendications précédentes, **caractérisé en ce que**, à l'issue de l'étape (1), les particules sont accumulées dans une trémie-tampon avant d'être transférées dans le broyeur à impacts de l'étape (2).

12. Procédé selon l'une quelconque des revendications précédentes, **caractérisé en ce que**, à l'issue de l'étape (2), les particules sont transférées dans un séparateur équipé d'un filtre à manches de manière à récupérer une fraction de particules inférieure à 100 µm avant leur transfert vers le broyeur de l'étape (3).

13. Procédé selon l'une quelconque des revendications précédentes, **caractérisé en ce que**, à l'issue de l'étape (3), les particules sont conditionnées en contenant étanche.

14. Procédé selon l'une quelconque des revendications précédentes, **caractérisé en ce que** l'étape (1) est précédée d'une étape de séparation des pièces métalliques au moyen d'un séparateur magnétique.

15. Utilisation du produit obtenu par le procédé selon l'une quelconque des revendications 1 à 14, comme matière secondaire dans un procédé de fabrication du ciment dans un four rotatif.
